# EUROPEAN PATENT SPECIFICATION

(11) **EP 3 126 295 B1**
(45) Date of publication and mention of the grant of the patent: **08.05.2019**
(21) Application number: 15717528.2
(22) Date of filing: 30.03.2015
(51) Int. Cl.: C02F 1/52, C02F 1/66, D21C 11/00, C02F 103/28

(54) **METHOD FOR REDUCING PHOSPHORUS IN EFFLUENT OR FILTRATE**
VERFAHREN ZUR VERRINGERUNG VON PHOSPHOR IN EINEM ABWASSER ODER FILTRAT
PROCÉDÉ DE RÉDUCTION DE PHOSPHORE DANS UN EFFLUENT OU UN FILTRAT

(30) Priority: 31.03.2014 FI 20145310
(43) Date of publication of application: 08.02.2017
(73) Proprietor: UPM-Kymmene Corporation, 00100 Helsinki (FI)
(72) Inventor: RISTOLAINEN, Matti, FI-53900 Lappeenranta (FI); TRAVERS, Dayana, 65000 Fray Bentos (UY)
(74) Representative: Papula Oy
(86) International application number: PCT/FI2015/050220
(87) International publication number: WO 2015/150629

(56) References cited:
- WO-A1-2015/001185
- US-A- 5 401 362
- US-B1- 6 830 696

## Description

### FIELD OF THE INVENTION

The invention relates to a method for reducing phosphorus in effluent or filtrate from a process which comprises at least one stage in which conditions are acidic. The invention further relates to a system for reducing phosphorus in effluent or filtrate from a process, in particular a chemical pulping process.

### BACKGROUND OF THE INVENTION

Effluents produced in pulp or paper mills and other effluent-producing plants are typically treated in waste water treatment plants to reduce the amount of compounds which may be harmful to the environment, such as phosphorus. Phosphorus must be removed from effluents that are discharged from the mill to the environment, e.g. to a water system, to prevent pollution. As environmental regulations restricting phosphorus emissions tend to become stricter, there is a need to reduce the amount of phosphorus in effluents that are conveyed from the mill to a waste water treatment plant and ultimately to the environment.

Traditional solutions for phosphorous removal involve e.g. tertiary treatment or use of phosphorus concentrating (P-concentrating) microorganisms. A drawback of tertiary treatment is the high investment and operating cost. P-concentrating microorganisms work in anaerobic media, which complicates the operations required and involves specific treatments for the effluent to be used.

The inventors have therefore recognized the need for a method for reducing phosphorus in effluent obtained from processes such as chemical pulping processes.

US 6,830,696 describes a method of treating spent alkaline black liquor, in which acidulated phosphate containing material is mixed with black liquor to bring the pH to about 3 to separate lignin from the black liquor. Additional CaO may then be added to bring the pH to about 9 or greater; Ca₃(PO₄)₂ precipitates and is separated to leave a NaOH solution for use again in the pulping process.

US 5,401,362 describes a method for removing transition metals from the treatment fluids in a cellulose pulp mill, in which a substantial portion of a filtrate obtained from a washing stage is treated by adding alkaline material to adjust the pH so that it is greater than 9, causing transition metals to precipitate out. After treatment, the precipitate is removed in a filter, and the obtained filtrate having a reduced transition metal ion content may be used in various locations.

### PURPOSE OF THE INVENTION

The purpose of the invention is to provide a new type of method for reducing phosphorus in effluent or filtrate from a process which comprises at least one stage in which conditions are acidic. Further, the purpose of the invention is to provide a system for reducing phosphorus in effluent or filtrate from a process, in particular a chemical pulping process.

### SUMMARY

The method according to the present invention is characterized by what is presented in claim 1.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 is a flow chart illustration of a method for reducing phosphorus in effluent or filtrate from a process which comprises at least one stage in which conditions are acidic.
Fig. 2 is a schematic illustration of a system for reducing phosphorus in effluent or filtrate from a chemical pulping process which comprises at least one stage in which conditions are acidic.

### DETAILED DESCRIPTION OF THE INVENTION

The present invention relates to a method for reducing phosphorus in effluent or filtrate from a process which comprises at least one stage in which conditions are acidic, wherein the method comprises the steps of:
a) obtaining a first portion of an effluent or filtrate from a stage in which conditions are acidic;
b) obtaining a second portion of an effluent or filtrate from the same or different stage in which conditions are acidic;
c) adjusting pH of the first portion of the effluent or filtrate to alkaline with an alkaline agent;
d) allowing phosphorus to be precipitated in form of a phosphate salt;
e) separating the precipitate using centrifugal forces to produce purified effluent or filtrate; and
f) combining the purified effluent or filtrate with the second portion of the effluent or filtrate.

In this context, the term "effluent" or "filtrate" should be understood as referring to an aqueous liquid that contains phosphorus, which is to be removed either completely or in part.

In this context, the term "effluent" should also be understood as referring to a waste liquid which is obtained from the process and which is to be discharged from the process. The effluent is usually treated for purifying purposes by waste water treatment before discharging. The waste water treatment may take place at a waste water treatment plant of a chemical pulping mill. The effluent may also refer e.g. a bleaching effluent or filtrate which is to be discharged or to be treated for purifying purposes by waste water treatment before discharging.

In this context, the term "filtrate" should also be understood as referring to an effluent from which solid suspended matter is removed by a filtration treatment, a flotation treatment or any other treatment. Thus the term "filtrate" does not necessarily imply that the solid suspended matter, such as fibers, have been removed by filtration.

In an embodiment, the precipitate is separated using a relative centrifugal force (RCF) of at least 40 x *g*, or -at least 150 x *g*, or at least 500 x *g*, or at least 1000 x *g*, or at least 1500 x *g*, or at least 2000 x *g*, or at least 2600 x *g*.

In an embodiment, the precipitate is separated using the centrifugal forces for at least 5 s, or at least 10 s, or at least 1 minute, or at least 2 minutes, or at least 3 minutes.

The time period for applying centrifugal forces may depend e.g. on the relative centrifugal force used. For instance, the precipitate may be separated using a relative centrifugal force (RCF) of at least 40 x *g* for at least 3 minutes, or using a relative centrifugal force (RCF) of at least 150 x *g* or at least 2600 x *g* for at least 5 s, or at least 1 minute.

In an embodiment, the precipitate is separated using a centrifugal apparatus, such as a separator, a decanter centrifuge or any other apparatus which uses centrifugal forces.

In an embodiment, the precipitate is separated using a separator or a decanter centrifuge.

In an embodiment, the centrifugal apparatus is a continuous centrifugal apparatus.

In an embodiment, the method further comprises the step g) of recovering the precipitate obtainable from step e).

The recovered precipitate can be reprocessed further for end uses or discarded.

The method may be used in a chemical pulping mill, in which chemical pulp is produced using the so-called sulphate or kraft process.

In this context, the term "pulp" should be understood as referring to a lignocellulosic fibrous material prepared by chemically or mechanically separating cellulose fibres from a natural fibre based material. So-called kraft or sulphate processes can be used for producing pulp.

The process is a chemical pulping process.

In an embodiment, the process is a kraft pulping process.

In an embodiment, the effluent or filtrate is issued from fiber line operations of a chemical pulp mill, such as a kraft pulp mill.

The operations of a kraft pulp mill are conventionally divided in a fiber line, a chemical recovery system and waste water treatment. The fiber line operations typically include cooking, brownstock washing (washing away spent cooking chemicals from the pulp), oxygen delignification, bleaching and pulp drying. In many conventional kraft pulp mills, the pH in the cooking, brownstock washing, oxygen delignification and knotting and screening stages is alkaline. Any effluents or filtrates obtained from such stages are typically alkaline. Often the pH in one or more bleaching stages is acidic. Thus effluents or filtrates obtained from bleaching stages may be acidic or alkaline, depending on the specific stage and the chemicals used therein.

In an embodiment, the effluent or filtrate is obtained from the first stage of the process in which the conditions are acidic.

The present inventors have found that typically very high phosphorus content is found in effluents or filtrates obtainable from the first stage of the process in which the conditions are acidic. For instance, a concentration of phosphorus of the effluent or filtrate may be 5 - 20 mg/l, or 9 - 16 mg/l. Thus it may be very useful to obtain the effluent or filtrate from the first stage of the process in which the conditions are acidic. In this embodiment, phosphorus content in effluents or filtrates from the process may significantly be reduced, even if only the effluent or filtrate from the first stage of the process in which the conditions are acidic, or a portion thereof, is treated according to the method of the invention.

The first portion of the effluent or filtrate and the second portion of the effluent or filtrate may be obtained from the same stage of the process in which the conditions are acidic. They may also be obtained from two or more different stages of the process in which the conditions are acidic.

In an embodiment, the first portion of the effluent or filtrate is obtained from a first stage in which conditions are acidic; and the second portion of the effluent or filtrate is obtained from a second and/or a later stage in which conditions are acidic.

In an embodiment, the first portion of the effluent or filtrate is obtained from the first stage of the process in which conditions are acidic.

In an embodiment, the first and/or second portion of effluent or filtrate comprises an effluent or filtrate obtained from a stage in which conditions are acidic, to which effluent or filtrate an alkaline effluent or filtrate has been added. In this embodiment, the pH of said second portion of effluent or filtrate may not be alkaline prior to step f). The pH of the first portion of effluent or filtrate may already be made alkaline by the addition or mixing of alkaline effluent or filtrate therein prior to step c), as the pH will in any case be adjusted to alkaline. The alkaline effluent or filtrate may be obtained from a stage of the process in which conditions are alkaline. The alkaline effluent may be added or mixed to an effluent or filtrate obtained from a stage in which conditions are acidic prior to step a), b), b1) and/or c). The alkaline effluent or filtrate may also be added or mixed to the second portion prior to step f), provided the pH of said second portion of effluent or filtrate is not alkaline prior to step f).

In an embodiment, the effluent or filtrate is obtained from the first stage of fiber line operations of a chemical pulp mill in which the conditions are acidic. The chemical pulp mill may be e.g. a kraft pulp mill.

In an embodiment, the effluent or filtrate is an acidic bleaching filtrate or an acidic bleaching effluent. Such acidic bleaching filtrates or acidic bleaching effluents are typically obtained from a chemical pulping process.

In an embodiment, the acidic bleaching filtrate or acidic bleaching effluent is the acidic bleaching filtrate or acidic bleaching effluent obtainable from the first acidic bleaching stage.

Typically very high phosphorus content is found in the acidic bleaching filtrate obtainable from the first acidic bleaching stage. Thus it may be very useful to obtain the acidic bleaching filtrate from the first acidic bleaching stage. In this embodiment, phosphorus content in effluents from the process may significantly be reduced, even if only the acidic bleaching filtrate from the first acidic bleaching stage, or a portion thereof, is treated according to the method of the invention.

In this context, the term "bleaching stage" may refer to any stage after brown stock stages, and should be understood as also including oxygen delignification stage(s), which selectively removes lignin, hexenuronic acid and/or metals. In this context, the term "bleaching stage" may also refer to any stages immediately following the oxygen stage. First bleaching stage can be an alkaline or an acidic one. Commonly it is an acidic A stage followed by a D stage without a washing stage between them. This is the so called A/D1 bleaching stage.

In an embodiment, the filtrate is an A, D, D1, A/D or A/D1 bleaching filtrate or any other acidic bleaching filtrate. "A" should be understood as referring to an acidic bleaching stage. "D" should be understood as referring to a chlorine dioxide bleaching stage. A, D and D1 stages may be stages separate from each other; each of A, D and D1 stages should however in this context be understood as being bleaching stages.

The acidic effluent may also be obtainable from the acidification treatment of unbleached pulp, which is performed before the bleaching, after brownstock washing and oxygen treatment of the oxygen delignification unit. This acidic effluent also typically contains dissolved phosphorus compounds.

The filtrate may also be an acidic filtrate obtainable from the acidification treatment of the unbleached pulp after brownstock washing, which treatment is performed to dissolve acid-dissolving phosphorus compounds contained in the pulp before bleaching.

In an example, the method comprises the steps of:
a) obtaining an effluent or filtrate from a stage in which conditions are acidic;
b1) dividing the effluent or filtrate into a first portion and a second portion;
c) adjusting pH of the first portion of the effluent or filtrate to alkaline with an alkaline agent;
d) allowing phosphorus to be precipitated in form of a phosphate salt;
e) separating the precipitate using centrifugal forces to produce purified effluent or filtrate; and
f) combining the purified effluent or filtrate with the second portion of the effluent or filtrate.

In step b1), the effluent or filtrate may be divided e.g. by dividing a flow of the effluent or filtrate into two separate flows. The first flow may be conveyed to steps c)-e) to obtain a flow of purified effluent or filtrate; the second flow of the effluent or filtrate may then be combined with the flow of purified effluent or filtrate.

In an embodiment, the pH of the effluent or filtrate obtained in step a) is below 7; or below 6; or below 3.

In an embodiment, the pH of the effluent or filtrate obtained in step b) is below 7; or below 6; or below 3.

In an embodiment, the pH of the effluent or filtrate obtained in step b1) is below 7; or below 6; or below 3.

In an embodiment, the pH of the effluent or filtrate obtained in step a) and step b) or b1) is below 7; or below 6; or below 3.

In an embodiment, the pH of the effluent or filtrate obtained in step a), b) and/or b1) is 1 - 7; or 2 - 7; or 1 - 6; or 2 - 6; or 1 - 3; or 2 - 3.

In an embodiment, the pH of the first portion of the effluent or filtrate is adjusted in step c) to 8 - 14; or 8 - 11; or to 9 - 10; or to 9.2 - 9.8.

When pH of the first portion of the effluent or filtrate is adjusted to alkaline, phosphorus precipitates, typically as calcium phosphate. The source of calcium in the calcium phosphate precipitated may be calcium originally contained in the effluent or filtrate and/or calcium that is introduced to the first portion of the effluent or filtrate as a component of the alkaline agent. Thus the precipitate typically contains calcium phosphate. The precipitate may further comprise other phosphate salts, such as calcium hydrogen phosphate; calcium carbonate; calcium sulphate; organic phosphorus compounds; and/or other precipitated/coprecipitated components.

The alkaline agent may be any agent that is capable of raising the pH of the first portion of the effluent or filtrate to a pH at which phosphorus can precipitate. The alkaline agent may be a solution, such as an aqueous solution, a solid, or a mixture thereof.

In an embodiment, the alkaline agent is
CaO;
an alkali metal hydroxide, such as NaOH;
Ca(OH)₂;
NH₄OH;
an alkaline effluent or filtrate;
an alkaline bleaching effluent or filtrate; or
a powder, an aqueous solution, or any mixture thereof.

In an embodiment, the alkaline agent is solid CaO.

In an embodiment, the alkaline agent is an aqueous solution of CaO, an aqueous solution of an alkali metal hydroxide such as NaOH, an aqueous solution of Ca(OH)₂, an aqueous solution of NH₄OH, or any mixture thereof.

The alkaline agent may also be a mixture of a solid and an aqueous solution.

If the alkaline agent is Ca(OH)₂, CaO, a powder, an aqueous solution or any mixture thereof, at least some of the calcium ions contained therein may precipitate with the phosphorus contained in the first portion of the effluent or filtrate.

The alkaline agent may be an alkaline agent that is used for adjusting pH of waste water, such as an aqueous solution of Ca(OH)₂.

The concentration of the alkaline agent may vary. A relatively strong alkaline agent, or an aqueous solution containing a high concentration of an alkaline agent, may however have the added utility that a small volume of the alkaline agent is needed to adjust the pH to alkaline. Thus an increase in volume and dissolution of the precipitate can be avoided. For instance, if an aqueous solution of Ca(OH)₂ is used as the alkaline agent, the concentration of the aqueous solution of Ca(OH)₂ is preferably at least 2 g/l, or more preferably at least 20 g/l. Even more preferably the alkaline agent is solid CaO.

In step c), the first portion of the effluent or filtrate may be mixed with the alkaline agent. The mixing typically accelerates the precipitation of phosphorus. The mixing may be effected e.g. by agitation. The mixing may also be effected using an apparatus suitable for mixing the alkaline agent with the first portion of the acidic effluent or filtrate. Such apparatus may be e.g. a tank or a piping comprising means for mixing. The means for mixing may be e.g. a mixer, a mixing arm or a stirrer. Such apparatus may also be e.g. a piping fitted with one or more nozzles for injecting the alkaline agent into the piping in which the first portion of the acidic effluent or filtrate may flow.

The temperature in in step c) may be set e.g. between 25 - 90°C. Increasing the temperature may enhance precipitation.

After the precipitate is separated from the first portion of the effluent or filtrate using centrifugal forces, the purified effluent or filtrate thus obtained has substantially reduced phosphorus content. The removal of phosphorus is typically so efficient that the purified effluent or filtrate obtained may be considered to be substantially free of phosphorus.

It may not always be desirable to completely eliminate phosphorus from the effluent or filtrate, in particular in cases when the effluent or filtrate is subsequently conveyed to a waste water treatment plant. Many waste water treatment plants utilize bacterial processes for waste water treatment, for which a low amount of phosphorus in the effluent or filtrate is preferable or even necessary. Further, it may be sufficient to treat only the first portion of the effluent or filtrate in order to significantly reduce phosphorus content in the effluent or filtrate. For instance, a treatment of all acidic effluents or filtrates obtainable from a process is not necessary to significantly reduce phosphorus in the total volume of effluents and filtrates obtainable from the whole process.

In an embodiment, the first portion of the effluent or filtrate consists of 2 - 95 % (v/v) ; 5 - 95 % (v/v); 5 - 50 % (v/v); or 10 - 40 % (v/v) of the total volume of the effluent or filtrate. In this context, the total volume of the effluent or filtrate should be understood as consisting of the total volume of both the first and second portion.

A significant reduction in phosphorus in effluent or filtrate may be obtained even if the first portion of the effluent or filtrate is a relatively small portion as compared to the whole volume of the effluent or filtrate.

The first and second portion of the effluent or filtrate or their volume ratios may be selected so that e.g. the concentration of phosphorus, the pH of said portions and/or the pH of the combined purified effluent or filtrate and the second portion of the effluent or filtrate is optimal.

The first portion of the effluent or filtrate has a higher content or concentration of phosphorus than the second portion.

In an embodiment, the first portion of the effluent or filtrate has a phosphorus concentration of 5 - 20 mg/l; or 9 - 16 mg/l.

In an embodiment, the first portion of the effluent or filtrate is obtainable from the stage in which conditions are acidic and in which the content or concentration of phosphorus is highest.

Step f) may be performed at any stage of the process before post-neutralization of the combination obtainable from step f) in a waste water treatment plant, wherein the post-neutralization is performed for adjusting the pH suitable for aerobic treatment. The post-neutralization is typically performed before the aeration basin. It may, for instance, be performed at the fiberline, before preliminary clarifier treatment or at any other stage before aeration.

The method further comprises the step h) of conveying the combination of the purified effluent or filtrate and the second portion of the effluent or filtrate obtainable from step f) to waste water treatment or discharge.

The combination of the purified effluent or filtrate and the second portion of the effluent or filtrate obtainable from step f) may be directly conveyed to waste water treatment, e.g. to a waste water treatment plant, or discharge. The pH of the combination of the purified effluent or filtrate and the second portion of the effluent or filtrate obtainable from step f) may also be further adjusted, e.g. to a neutral pH, if necessary.

In an embodiment, the pH of the combination of the purified effluent or filtrate and the second portion of the effluent or filtrate obtainable from step f) is neutral or near neutral.

In an embodiment, the pH of the combination of the purified effluent or filtrate and the second portion of the effluent or filtrate obtainable from step f) is in the range of 6 to 8, or in the range of 6.5 to 7.5.

In an embodiment, the pH of the combination of the purified effluent or filtrate and the second portion of the effluent or filtrate obtainable from step f) is adjusted to neutral or near neutral.

In an embodiment, the pH of the combination of the purified effluent or filtrate and the second portion of the effluent or filtrate obtainable from step f) is adjusted to a pH in the range of 6 to 8, or in the range of 6.5 to 7.5.

If the purified effluent or filtrate is combined with the second portion of the effluent or filtrate, the second portion of the effluent or filtrate is often capable of adjusting the pH to a lower level. The pH of the resulting combination may thus be neutral or close to a neutral pH. Depending e.g. on the ratio of the volume of the purified effluent or filtrate to the volume of the second portion of the effluent or filtrate, pH of the combination of the purified effluent or filtrate and the second portion of the effluent or filtrate obtainable from step f) may be further adjusted. A suitable neutralising agent may be used to adjust the pH of the effluent. The neutralising agent may be an alkaline agent or an acidic agent.

In an embodiment, the alkaline agent with which the pH of the combination of the purified effluent or filtrate and the second portion of the effluent or filtrate obtainable from step f) is adjusted is the same alkaline agent with which pH of the first portion of the effluent or filtrate is adjusted to alkaline in step c).

Steps g) and h) may be performed simultaneously or in any order.

A system for reducing phosphorus in effluent or filtrate from a chemical pulping process which comprises at least one stage in which conditions are acidic is disclosed, wherein the system comprises:
a digestion apparatus for cooking pulp;
a washing apparatus for washing pulp;
a bleaching apparatus comprising an apparatus for separating acidic effluent or filtrate from pulp obtainable from a bleaching stage in which conditions are acidic;
a purification apparatus for removing phosphorus from the acidic effluent or filtrate;
a first conduit between the apparatus for separating effluent or filtrate from pulp and the purification apparatus for conveying a first portion of the acidic effluent or filtrate from the apparatus for separating effluent or filtrate from pulp to the purification apparatus;
a second conduit for conveying a second portion of the acidic effluent or filtrate;
the purification apparatus comprising an apparatus adapted for mixing an alkaline agent with the first portion of the acidic effluent or filtrate and for allowing phosphorus to be precipitated in form of a phosphate salt, and a centrifugal apparatus for separating the precipitate to produce purified effluent or filtrate; and
an apparatus for combining the purified effluent or filtrate with the second portion of the acidic effluent or filtrate.

In an embodiment, the first and second conduit are both connected to the apparatus for separating effluent or filtrate from pulp obtainable from a bleaching stage in which conditions are acidic. In an embodiment, the first conduit is connected to the apparatus for separating effluent or filtrate from pulp obtainable from a bleaching stage in which conditions are acidic, and the second conduit is connected to the first conduit. In an embodiment, the second conduit is connected to the apparatus for separating effluent or filtrate from pulp obtainable from a bleaching stage in which conditions are acidic, and the first conduit is connected to the second conduit. In such embodiments, the first and second conduit may be connected either directly or indirectly. There is thus a flow connection from the apparatus for separating effluent or filtrate from pulp to the apparatus adapted for mixing an alkaline agent with the first portion of the acidic effluent or filtrate and for allowing phosphorus to be precipitated in form of a phosphate salt; and a flow connection from the apparatus adapted for mixing an alkaline agent with the first portion of the acidic effluent or filtrate and for allowing phosphorus to be precipitated in form of a phosphate salt to the centrifugal apparatus for separating the precipitate to produce purified effluent or filtrate. There is also a flow connection from the centrifugal apparatus for separating the precipitate to produce purified effluent or filtrate to the apparatus for combining the purified effluent or filtrate with the second portion of the acidic effluent or filtrate.

The apparatus for combining the purified effluent or filtrate with the second portion of the acidic effluent or filtrate may comprise e.g. a third conduit for conveying the purified effluent or filtrate from the centrifugal apparatus. It may further comprise means for connecting the third conduit for conveying the purified effluent or filtrate from the centrifugal apparatus to the second conduit for conveying a second portion of the acidic effluent or filtrate. The apparatus for combining the purified effluent or filtrate with the second portion of the acidic effluent or filtrate may also comprise e.g. a mixer, a tank or a basin via which the third and second conduit are connected. The third and second conduit may be connected either directly or indirectly.

The system may also contain pumps for various fluids, appropriate piping, tanks, and/or mixers. It may further contain e.g. drying apparatus for drying bleached pulp, a chemical recovery system and/or other components of a chemical pulp mill. The chemical recovery system may include an alkali cycle and a lime circulation system.

In an embodiment, the bleaching apparatus comprises an apparatus for separating effluent or filtrate from pulp obtainable from a bleaching stage for separating acidic effluent or filtrate obtainable from the first bleaching stage in which conditions are acidic.

In an embodiment, the apparatus for separating effluent or filtrate from pulp obtainable from a bleaching stage is a filtering apparatus for filtering acidic effluent or filtrate obtainable from a bleaching stage.

In other embodiments, the apparatus for separating effluent or filtrate from pulp obtainable from a bleaching stage may be a press, a wash press, a drum displacer washer or any other apparatus which is capable of separating pulp and effluent or filtrate.

In an embodiment, the system comprises:
a digestion apparatus for cooking pulp;
a washing apparatus for washing pulp;
a bleaching apparatus comprising an apparatus for separating effluent or filtrate from pulp obtainable from a bleaching stage in which conditions are acidic;
a first conduit for conveying a first portion of the acidic effluent or filtrate from the apparatus for separating effluent or filtrate from pulp;
a purification apparatus for removing phosphorus from the acidic effluent or filtrate;
a second conduit for conveying a second portion of the acidic effluent or filtrate;
wherein the first end of the first conduit is connected to the apparatus for separating effluent or filtrate from pulp and the second end of the first conduit is connected to the purification apparatus;
the purification apparatus comprises apparatus adapted for mixing an alkaline agent with the first portion of the acidic effluent or filtrate and for allowing phosphorus to be precipitated in form of a phosphate salt; a centrifugal apparatus for separating the precipitate to produce purified effluent or filtrate; and a third conduit for conveying the purified effluent or filtrate from the purification apparatus; and
the third conduit is connected to the second conduit for combining the purified effluent or filtrate with the second portion of the acidic effluent or filtrate.

The first, second and third conduit may be connected to respective components of the system directly or indirectly.

Each of the first, second and third conduit may comprise e.g. a pipe or any other means for establishing a flow connection.

In an embodiment, the apparatus adapted for mixing an alkaline agent with the first portion of the acidic effluent or filtrate comprises a conduit for introducing the alkaline agent. It may further comprise apparatus for mixing the alkaline agent with the first portion of the acidic effluent or filtrate. Such apparatus may be e.g. piping fitted with one or more nozzles for injecting the alkaline agent into the piping in which the first portion of the acidic effluent or filtrate may flow.

The alkaline agent may be any alkaline agent described above. In an embodiment, the alkaline agent is
CaO;
an alkali metal hydroxide, such as NaOH;
Ca(OH)₂;
NH₄OH;
an alkaline effluent or filtrate;
an alkaline bleaching effluent or filtrate; or
a powder, an aqueous solution, or any mixture thereof.

In an embodiment, the system comprises a reactor for bringing the alkaline agent in contact with the first portion of the acidic effluent or filtrate to effect the precipitation of phosphorus. The reactor may be fitted with one or more nozzles for injecting the alkaline agent into the reactor. The alkaline agent may thus be introduced continuously by injecting it in a flow of the first portion of the acidic effluent or filtrate. In a reactor, the first portion of the acidic effluent or filtrate may flow in a pipe and the alkaline agent may be injected into the flow.

The centrifugal apparatus may be any apparatus which uses centrifugal forces. The centrifugal apparatus uses centrifugal forces to separate the precipitate from the mixture obtainable by mixing the alkaline agent with the first portion of the acidic effluent or filtrate.

In an embodiment, the centrifugal apparatus is a separator or a decanter centrifuge.

The system may further comprise an apparatus for recovering the precipitate, such as a solids discharge apparatus.

The second conduit and the third conduit may be connected to each other e.g. by using a suitable pipe connection or fitting. They may also be connected via a tank, a mixer or a basin for combining and/or mixing the purified effluent or filtrate and the second portion of the acidic effluent or filtrate.

The system may further comprise a piping or a conduit for passing the combination of the purified effluent or filtrate and the second portion of the effluent or filtrate obtainable from step f) to a waste water treatment plant or to discharge.

The embodiments of the invention described hereinbefore may be used in any combination with each other. Several of the embodiments may be combined together to form a further embodiment of the invention. A method or a system, to which the invention is related, may comprise at least one of the embodiments of the invention described hereinbefore.

An advantage of the present invention is that the content of phosphorus in effluent or filtrate coming from the process may be significantly reduced by the method according to the present invention.

An advantage of the method according to the present invention is that it is a low cost process, which does not require significant investments for equipment. It also does not require significant investments for reagents; reagents such as alkaline agents which would in any case be used to adjust the pH of effluent or filtrate may be utilized.

An advantage of the method according to the present invention is that the need to adjust the pH of effluent or filtrate is reduced.

An advantage of the method according to the present invention is that a significant reduction in phosphorus in effluent or filtrate may be obtained even if the volume of the first portion of the effluent or filtrate is relatively small as compared to the whole volume of the effluent or filtrate.

An advantage of the method according to the present invention is that small amounts of phosphorus may be retained in the effluent or filtrate that is conveyed to waste water treatment; this may be advantageous e.g. when the subsequent waste water treatment utilizes bacterial processes, for which an amount of phosphorus in the effluent or filtrate is preferable.

An advantage of the method according to the present invention is that it can be performed e.g. at the fiber line of a chemical pulping mill. Thus it can be used to reduce phosphorus in effluent or filtrate already at the chemical pulping mill.

An advantage of the method according to the present invention is that the phosphorus containing precipitate may be recovered and reprocessed for further use.

An advantage of the method is that centrifugal forces are very effective in separating the precipitate. Centrifugal apparatuses do not have the propensity to become clogged and may be directly connected e.g. to other process apparatuses such as pipes.

### EXAMPLES

Reference will now be made in detail to the embodiments of the present invention, an example of which is illustrated in the accompanying drawing.

The description below discloses some embodiments of the invention in such a detail that a person skilled in the art is able to utilize the invention based on the disclosure. Not all steps of the embodiments are discussed in detail, as many of the steps will be obvious for the person skilled in the art based on this specification.

For reasons of simplicity, item numbers will be maintained in the following exemplary embodiments in the case of repeating components.

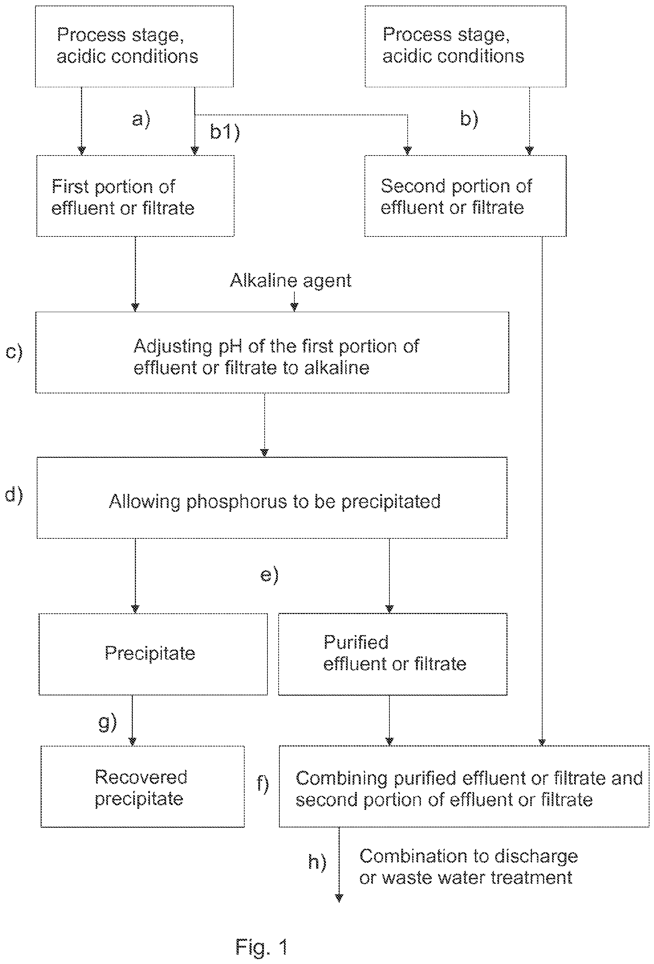

Figure 1 illustrates a method according to one embodiment of the present invention for reducing phosphorus in effluent or filtrate from a process which comprises at least one stage in which conditions are acidic. The process comprises in this embodiment at least two separate process stages in which conditions are acidic. In step a), a first portion of an effluent or filtrate is obtained from one such stage. A second portion of an effluent or filtrate is obtained either from a separate stage in step b), or the effluent or filtrate which is obtained from a single stage is divided in step b1) into a first portion and a second portion. The first portion thus obtained is conveyed to step c). Alkaline agent is added to adjust the pH of the first portion of the effluent or filtrate to alkaline in step c). In step d), phosphorus is allowed to be precipitated, and the precipitate is separated using centrifugal forces in step e). The purified effluent or filtrate from which the precipitate has been separated using centrifugal forces is conveyed to step f), in which the purified effluent or filtrate and the second portion of the effluent or filtrate are combined. The combination thus obtained may be conveyed to discharge or waste water treatment (step h)). The precipitate obtained in step e) using centrifugal forces may be recovered in step g).

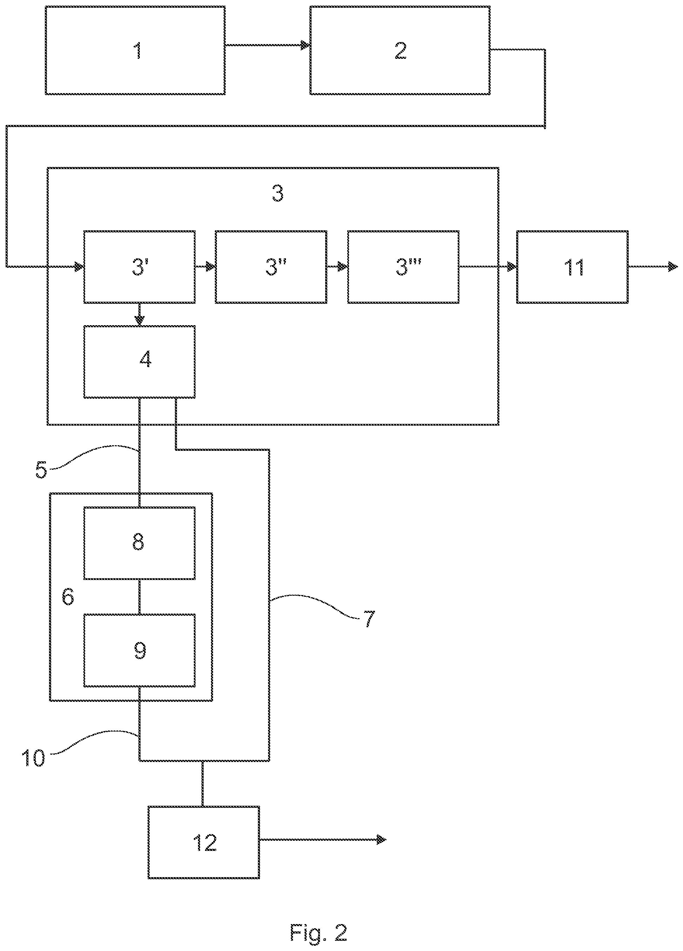

Figure 2 illustrates a system according to one embodiment disclosed for reducing phosphorus in effluent or filtrate from a chemical pulping process which comprises at least one stage in which conditions are acidic. Various components that may be a part of the system have not been included in this schematic illustration for simplicity.

In this exemplary embodiment, the system comprises a digestion apparatus 1 for cooking pulp from lignocellulosic material. From the digestion apparatus 1, the pulp (often called "brownstock") is conveyed to a washing apparatus 2 for washing the pulp. The washing apparatus 2 may contain e.g. one or more brownstock washers, typically using countercurrent flow. The washed pulp is conveyed to a bleaching apparatus 3. In this embodiment, the bleaching apparatus contains three bleaching stages denoted 3', 3" and 3"'. Stage 3', in this embodiment the first bleaching stage, is a bleaching stage in which conditions are acidic, for instance a A/D1 stage; stages 3" and 3'" may be acidic or alkaline. The system also comprises apparatus 11 for drying pulp. The bleaching apparatus 3 comprises an apparatus 4 for separating effluent or filtrate from pulp obtainable from bleaching stage 3'. The system further comprises a first conduit 5 for conveying a first portion of the acidic effluent or filtrate obtainable using the apparatus 4 for separating effluent or filtrate from pulp to the purification apparatus 6. The first conduit 5 is directly or indirectly connected to the apparatus 4 for separating effluent or filtrate from pulp and to the purification apparatus 6. The purification apparatus 6 comprises an apparatus 8 adapted for mixing an alkaline agent with the first portion of the acidic effluent or filtrate and for allowing phosphorus to be precipitated. The apparatus 8 may contain e.g. a tank for allowing phosphorus to be precipitated. Such a tank may be e.g. a cone bottom tank. The apparatus 8 further comprises a centrifugal apparatus 9 for separating the precipitate to produce purified effluent or filtrate.

The system also comprises a second conduit 7 for conveying a second portion of the acidic effluent or filtrate obtainable from the apparatus 4 for separating effluent or filtrate from pulp; and a third conduit 10 for conveying the purified effluent or filtrate from the centrifugal apparatus 9. The second conduit 7 is connected to the apparatus 4 for separating effluent or filtrate from pulp directly or indirectly via suitable means. The third conduit 10 is connected to the centrifugal apparatus 9 for separating the precipitate to produce purified effluent or filtrate. The second conduit 7 and third conduit 10 are connected directly or indirectly for combining the purified effluent or filtrate with the second portion of the acidic effluent or filtrate. The second conduit 7 and the third conduit 10 may be connected e.g. so that they form a conduit for conveying the combination of the purified effluent or filtrate and the second portion of the acidic effluent or filtrate to a waste water treatment plant 12 and further to discharge.

### EXAMPLE 1 - Phosphorus removal from acidic bleaching filtrate

Acidic bleaching filtrates (A/D1 filtrates) were obtained from a kraft pulp mill. A 9 m³/ADt flow of filtrate was divided into two portions, a first portion of 2 m³/ADt and a second portion of 7 m³/ADt.

The first portion was treated using an aqueous solution of calcium hydroxide (Ca(OH)₂). Calcium hydroxide was used in a concentration of 1.84 g/l or 20 g/l. pH of the first portion was adjusted to 9.0, 9.2, 9.5, 9.8 or 10.0 by adding the aqueous solution of calcium hydroxide. Precipitate was removed by decantation after 2 hours of adjusting the pH to alkaline. After precipitate removal, the purified filtrate obtained from the first portion was combined with the second portion and conveyed to the waste water treatment plant.

Samples were obtained from the first portion of the filtrate prior to addition of the solution of calcium hydroxide and after removal of precipitate. Total phosphorus content of the samples were determined using the analysis method "ICP (Inductive Coupled Plasma) metals with microwave digestion" SFS-EN ISO 11885.

A reduction of approx. 60-99 % in phosphorus content was measured in the purified filtrate obtained from the first portion as compared to the untreated acidic bleaching filtrate. Adjusting the pH of the first portion to a pH above 9.2 did not improve the reduction obtained.

The solution with the higher Ca(OH)₂ concentration (20 g/l) gave a better reduction than the more dilute Ca(OH)₂ solution (1.84 g/l). This was likely due to higher sample dilution with 1.84 g/l which nearly double filtrate amount after treatment compared to 20 g/l (dilution factor was only 1.06).

### EXAMPLE 2 - Phosphorus removal from acidic bleaching filtrate using centrifugal forces

Acidic bleaching filtrates (A/D1 filtrates) were obtained from a kraft pulp mill and a portion of the acidic bleaching filtrate was treated using an aqueous solution of calcium hydroxide (Ca(OH)₂) as described in Example 1. The precipitate formed was separated using centrifugal forces of 500, 1000 or 4000 rpm using a tabletop centrifuge (P-Selecta MIXTASEL 7000575), corresponding to approx. 41x g, 165x g and 2640x g, respectively.

A part of the precipitate could be removed from solution already after a centrifugation of 500 rpm for 1 minute. However, better results could be obtained if the rotation speed was increased to 4000 rpm. Further, increasing the centrifugation time to 3 minutes at 500 or 1000 rpm improved the result.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for reducing phosphorus in effluent or filtrate from a chemical pulping process which comprises at least one stage in which conditions are acidic, **characterized in that** the method comprises the steps of:
a) obtaining a first portion of an effluent or filtrate from a stage in which conditions are acidic, wherein the effluent or filtrate is an aqueous liquid that contains phosphorus;
b) obtaining a second portion of an effluent or filtrate from the same or different stage in which conditions are acidic, wherein the first portion of the effluent or filtrate has a higher content or concentration of phosphorus than the second portion;
c) adjusting pH of the first portion of the effluent or filtrate to alkaline with an alkaline agent;
d) allowing phosphorus in the first portion of the effluent or filtrate to be precipitated in form of a phosphate salt;
e) separating the precipitate from the first portion of effluent or filtrate using centrifugal forces to produce purified effluent or filtrate; and
f) combining the purified effluent or filtrate with the second portion of the effluent or filtrate; wherein
the effluent or filtrate is an acidic bleaching filtrate or an acidic bleaching effluent, and
the method further comprises the step h) of conveying the combination of the purified effluent or filtrate and the second portion of the effluent or filtrate obtainable from step f) to waste water treatment or discharge.

2. The method according to claim 1, wherein the precipitate is separated using a relative centrifugal force (RCF) of at least 40x g, or at least 150x g, or at least 2600x g.

3. The method according to claim 1 or 2, wherein the precipitate is separated using a centrifugal apparatus, such as a separator, a decanter centrifuge or any other apparatus which uses centrifugal forces.

4. The method according to any one of claims 1 - 3, wherein the method further comprises the step g) of recovering the precipitate obtainable from step e) .

5. The method according to any one of claims 1 - 4, wherein the effluent or filtrate is issued from fiber line operations of a chemical pulp mill.

6. The method according to any one of claims 1 - 5, wherein the effluent or filtrate is obtained from the first stage of the process in which the conditions are acidic.

7. The method according to any one of claims 1 - 6, wherein the pH of the effluent or filtrate obtained in step a) and/or b) is below 6; or below 3.

8. The method according to any one of claims 1 - 7, wherein the acidic bleaching effluent or the acidic bleaching filtrate is the acidic bleaching effluent or the acidic bleaching filtrate obtainable from the first acidic bleaching stage.

9. The method according to any one of claims 1 - 8, wherein the pH of the first portion of the effluent or filtrate is adjusted in step c) to 8 - 14; or 8 - 11; or to 9 - 10; or to 9.2 - 9.8.

10. The method according to any one of claims 1 - 9, wherein the alkaline agent is
CaO;
an alkali metal hydroxide, such as NaOH;
Ca(OH)₂;
NH₄OH;
an alkaline effluent or filtrate;
an alkaline bleaching effluent or filtrate;
or
a powder, an aqueous solution, or any mixture
thereof.

11. The method according to any one of claims 1 - 10, wherein the first portion of the effluent or filtrate consists of 2 - 95 % (v/v); 5 - 50 % (v/v) ; or 10 - 40 % (v/v) of the total volume of the effluent or filtrate.

## Patentansprüche

1. Ein Verfahren zur Reduzierung von Phosphor in Abwasser oder Filtrat aus einem chemischen Aufschlussverfahren, das mindestens eine Stufe umfasst, in der die Bedingungen sauer sind, **dadurch gekennzeichnet, dass** das Verfahren die folgenden Schritte umfasst:
a) Erhalten eines ersten Teils an Abwasser oder Filtrats aus einer Stufe, in der die Bedingungen sauer sind, wobei das Abwasser oder Filtrat eine wässrige Flüssigkeit ist, die Phosphor enthält;
b) Erhalten eines zweiten Teils an Abwasser oder Filtrat aus derselben oder anderen Stufe, in der die Bedingungen sauer sind, wobei der erste Teil des Abwassers oder Filtrats einen höheren Gehalt oder Konzentration an Phosphor aufweist, als der zweite Teil;
c) Einstellen des pH-Wertes des ersten Teils des Abwassers oder Filtrats auf alkalisch mit einem alkalischen Mittel;
d) Ermöglichen, dass Phosphor im ersten Teil des Abwassers oder Filtrats in Form eines Phosphatsalzes präzipitiert wird;
e)Trennen des Präzipitats von dem ersten Teil des Abwassers oder Filtrats durch Zentrifugalkräfte, um gereinigtes Abwasser oder Filtrat zu erzeugen; und
f) Kombinieren des gereinigten Abwassers oder Filtrats mit dem zweiten Teil des Abwassers oder Filtrats, wobei
das Abwasser oder Filtrat ein saures Bleichfiltrat oder ein saures Bleichabwasser ist; und
das Verfahren weiter umfassend den Schritt h) des Förderns der Kombination aus dem gereinigten Abwasser oder Filtrat und dem zweiten Teil des Abwassers oder Filtrats, der aus Schritt f) erhältlich ist, zur Abwasserbehandlung oder -entsorgung.

2. Das Verfahren nach Anspruch 1, wobei das Präzipitat unter Verwendung einer relativen Zentrifugalkraft (RCF) von mindestens 40x g, oder mindestens 150x g, oder mindestens 2600x g abgetrennt wird.

3. Das Verfahren nach Anspruch 1 oder 2, wobei das Präzipitat unter Verwendung einer Zentrifugalvorrichtung , wie beispielsweise eines Separators, einer Dekanterzentrifuge oder einer anderen Vorrichtung, die Zentrifugalkräfte nutzt, abgetrennt wird.

4. Das Verfahren nach einem der Ansprüche 1 - 3, wobei das Verfahren weiter den Schritt g) der Rückgewinnung des aus Schritt e) erhaltenen Präzipitats umfasst.

5. Das Verfahren nach einem der Ansprüche 1 - 4, wobei das Abwasser oder Filtrat aus Faseranlagenbetrieben einer chemischen Zellstofffabrik stammt.

6. Das Verfahren nach einem der Ansprüche 1 - 5, wobei das Abwasser oder Filtrat aus der ersten Stufe des Prozesses erhalten wird, in der die Bedingungen sauer sind.

7. Das Verfahren nach einem der Ansprüche 1 - 6, wobei der pH-Wert des in Schritt a) und/oder b) erhaltenen Abwassers unter 6; oder unter 3 liegt.

8. Das Verfahren nach einem der Ansprüche 1 - 7, wobei das saure Bleichabwasser oder das saure Bleichfiltrat das saure Bleichabwasser oder das saure Bleichfiltrat ist, das aus der ersten sauren Bleichstufe erhältlich ist.

9. Das Verfahren nach einem der Ansprüche 1 - 8, wobei der pH-Wert des ersten Teils des Abwassers oder Filtrats in Schritt c) auf 8 - 14; oder 8 - 11; oder auf 9 - 10; oder auf 9,2 - 9,8 eingestellt wird.

10. Das Verfahren nach einem der Ansprüche 1 - 9, wobei das alkalische Mittel
CaO;
ein Alkalimetallhydroxid, wie beispielsweise NaOH;
Ca(OH)₂;
NH₄OH;
ein alkalisches Abwasser oder Filtrat;
ein alkalisches Bleichabwasser oder -filtrat;
oder
ein Pulver, eine wässrige Lösung, oder eine Mischung davon ist.

11. Das Verfahren nach einem der Ansprüche 1 - 10, wobei der erste Teil des Abwassers oder Filtrats aus 2 - 95 % (V/V); 5 - 50 % (V/V); oder 10 - 40 % (V/V) des gesamten Volumens des Abwassers oder Filtrats besteht.

## Revendications

1. Procédé permettant de réduire le phosphore dans un effluent ou un filtrat provenant d'un processus de réduction en pâte chimique qui comprend au moins une étape dans laquelle les conditions sont acides, **caractérisé en ce que** le procédé comprend les étapes suivantes :
a) l'obtention d'une première partie d'un effluent ou d'un filtrat provenant d'une étape dans laquelle les conditions sont acides, l'effluent ou le filtrat étant un liquide aqueux qui contient du phosphore ;
b) l'obtention d'une seconde partie d'un effluent ou d'un filtrat provenant de la même étape ou d'une autre étape dans laquelle les conditions sont acides, la première partie de l'effluent ou du filtrat ayant une teneur ou une concentration en phosphore supérieure à celle de la seconde partie ;
c) le réglage du pH de la première partie de l'effluent ou du filtrat sur un pH alcalin avec un agent alcalin ;
d) le fait de laisser le phosphore de la première partie de l'effluent ou du filtrat précipiter sous la forme d'un sel de phosphate ;
e) la séparation du précipité de la première partie de l'effluent ou du filtrat à l'aide de forces centrifuges pour produire un effluent ou un filtrat purifié ; et
f) la combinaison de l'effluent ou du filtrat purifié avec la seconde partie de l'effluent ou du filtrat ; dans lequel
l'effluent ou le filtrat est un filtrat de blanchiment acide ou un effluent de blanchiment acide, et
le procédé comprend en outre l'étape h) d'acheminement de la combinaison de l'effluent ou du filtrat purifié et de la seconde partie de l'effluent ou du filtrat susceptible d'être obtenue à l'issue de l'étape f) vers une installation de traitement ou d'évacuation des eaux usées.

2. Procédé selon la revendication 1, dans lequel le précipité est séparé à l'aide d'une force centrifuge relative (RCF) d'au moins 40x g, ou d'au moins 150x g ou d'au moins 2600x g.

3. Procédé selon la revendication 1 ou 2, dans lequel le précipité est séparé à l'aide d'un appareil centrifuge, tel qu'un séparateur, un décanteur centrifuge ou tout autre appareil qui utilise des forces centrifuges.

4. Procédé selon la revendication 1 à 3, dans lequel le procédé comprend en outre l'étape g) de récupération du précipité susceptible d'être obtenu à l'issue de l'étape e).

5. Procédé selon l'une quelconque des revendications 1 à 4, dans lequel l'effluent ou le filtrat est issu d'opérations de ligne de fibre d'une installation de réduction en pâte chimique.

6. Procédé selon l'une quelconque des revendications 1 à 5, dans lequel l'effluent ou le filtrat est obtenu à l'issue de la première étape du procédé dans laquelle les conditions sont acides.

7. Procédé selon l'une quelconque des revendications 1 à 6, dans lequel le pH de l'effluent ou du filtrat obtenu aux étapes a) et/ou b) est inférieur à 6 ; ou inférieur à 3.

8. Procédé selon l'une quelconque des revendications 1 à 7, dans lequel l'effluent de blanchiment acide ou le filtrat de blanchiment acide est l'effluent de blanchiment acide ou le filtrat de blanchiment acide susceptible d'être obtenu à l'issue de la première étape de blanchiment acide.

9. Procédé selon l'une quelconque des revendications 1 à 8, dans lequel le pH de la première partie de l'effluent ou du filtrat est réglé à l'étape c) sur une valeur de 8 à 14 ; ou de 8 à 11 ; ou de 9 à 10 ; ou de 9,2 à 9,8.

10. Procédé selon l'une quelconque des revendications 1 à 9, dans lequel l'agent alcalin est
CaO ;
un hydroxyde de métal alcalin, tel que NaOH ;
Ca(OH)₂ ;
NH₄OH;
un effluent ou un filtrat alcalin ;
un effluent ou un filtrat de blanchiment alcalin ; ou
une poudre, une solution aqueuse, ou l'un quelconque de leurs mélanges.

11. Procédé selon l'une quelconque des revendications 1 à 10, dans lequel la première partie de l'effluent ou du filtrat est constituée de 2 à 95 % (v/v) ; de 5 à 50 % (v/v) ; ou de 10 à 40 % (v/v) du volume total de l'effluent ou du filtrat.
